Europäisches Patentamt

European Patent Office

Office européen des brevets

(11) Veröffentlichungsnummer: **0 437 837 A2**

## (12) EUROPÄISCHE PATENTANMELDUNG

(21) Anmeldenummer: **90125529.9**

(22) Anmeldetag: **27.12.90**

(51) Int. Cl.5: **G05D 16/06**

(30) Priorität: **18.01.90 DE 4001329**

(43) Veröffentlichungstag der Anmeldung:
**24.07.91 Patentblatt 91/30**

(84) Benannte Vertragsstaaten:
**DE DK FR GB IT NL**

(71) Anmelder: **GASTECHNIC PRODUKTIONS- UND
VERTRIEBSGESELLSCHAFT m.b.H.
Daimlerstrasse 5 - 7
W-7541 Straubenhardt 1 (Feldrennach)(DE)**

(72) Erfinder: **Standke, Gerhard, Elek.Ing.
Siemensstrasse 11
W-7541 Straubenhardt 1(DE)**
Erfinder: **Spiesser, Gilbert, Ing .
Hölderlinstrasse 11
W-7541 Straubenhardt 1(DE)**

(54) **Gasarmatur mit einem Gasdruckregler.**

(57) Bei einer Gasarmatur mit einem Gasdruckregler (16) ist mit dem Gasdruckregler (16) wenigstens ein Sicherheitsventil (18,20) in Reihe geschaltet, durch welches der Gasweg vollständig absperrbar ist. Der Gasdruckregler (16) enthält ein Regelglied (60) ohne Nullabschluß in Form eines vollständig druckentlasteten Kolbenschiebers, der von einem Servoregler-meßwerk betätigt wird.

## GASARMATUR MIT EINEM GASDRUCKREGLER

Die Erfindung betrifft eine Gasarmatur mit einem Gasdruckregler.

Ein Gasdruckregler weist ein Regelglied auf, das mit einer Stellmembran verbunden ist. Üblicherweise ist das Regelglied ein Ventilteller, der mit einem Ventilsitz zusammenwirkt. Es ergibt sich dann ein Ringspalt zwischen Regelglied und Ventilsitz, über welchen eine Eingangskammer mit einer Ausgangskammer des Gasdruckreglers verbunden ist. In der Eingangskammer herrscht ein ungeregelter Eingangsdruck. In der Ausgangskammer herrscht ein geregelter Ausgangsdruck. Die Reglermwembran ist auf der einen Seite von dem Ausgangsdruck beaufschlagt. Auf der anderen, entgegengesetzten Seite wirkt auf die Reglermembran eine Belastung, z.B. eine entsprechend vorbelastete Feder. Es stellt sich ein Gleichgewichtszustand mit einer solchen Ringspalt zwischen Ventilteller und Ventilsitz ein, daß der auf die Fläche der Stellmembran wirksame Ausgangsdruck der Vorlast die Waage hält. Es wird dadurch der Ausgangsdruck auf einen durch die Vorlast bestimmten Wert geregelt.

Auf den Ventilteller wirkt die Differenz zwischen Eingangs- und Ausgangsdruck. Das erzeugt eine zusätzliche Kraft im öffnenden Sinne, welche vom Eingangsdruck abhängt und die Regelung des Ausgangsdrucks stört. Es ist daher bekannt, durch eine ebenfalls von der Druckdifferenz zwischen Eingangs- und Ausgangsdruck beaufschlagte Entlastungsmembran eine Druckentlastung des Ventiltellers zu bewirken.

Im Grenzfall sitzt bei den bekannten Gasdruckreglern der Ventilteller auf dem Ventilsitz auf und sperrt den Gasdurchgang durch den Gasadruckregler vollständig ab (Regler mit Nullabschluß).

Die bekannten Regelventile haben eine ungünstige Charakteristik im Bereich geringer Gasmengen. Schon ein geringer Hub des Ventiltellers gegenüber dem Ventilsitz bewirkt eine starke Änderung der hindurchtretenden Gasmenge. Dadurch wird die Regelgenauigkeit im Bereich kleiner Gasmengen schlecht. Die Verwendung von üblichen Kolbenschiebern mit Nullabschluß als Regelventil, durch welche sich eine günstigere Charakteristik erreichen ließe, würde zu störenden Reibungskräften führen, die ebenfalls die Regelgenauigkeit beeinflussen.

Der Erfindung liegt die Aufgabe zugrunde, eine Gasarmatur mit einem Gasdruckregler zu schaffen, welche ein besonders exaktes Regelverhalten im Bereich geringer Gasmengen zeigt.

Der Erfindung liegt weiter die Aufgabe zugrunde, eine Gasarmatur mit einem Gasdruckregler zu schaffen, mit welcher ein beliebiges, gewünschtes Anfahrverhalten erzielbar ist.

Erfindungsgemäß wird diese Aufgabe dadurch gelöst, daß

(a) der Gasdruckregler ein Servoreglermeßwerk enthält und das Reglerventil des Gasdruckreglers ein Kolbenschieber ist,

(b) mit dem Gasdruckregler wenigstens ein Sicherheitsventil in Reihe geschaltet ist, durch welches der Gasweg vollständig absperrbar ist, und

(c) der Gasdruckregler ein Regelglied ohne Nullabschluß enthält.

Das Regelglied arbeitet somit ohne Nullabschluß. Es kann dann beispielsweise ein Kolbenschieber als Regelventilglied verwendet werden. Ein solcher gestattet eine feinfühlige Regelung auch bei sehr geringen Gasmengen. Da der Kolbenschieber nicht dicht geführt zu werden braucht, werden die Reibungskräfte an einer solchen Führung vermieden. Der Abschluß des Gasdurchganges erfolgt durch ein oder zwei gesonderte Sicherheitsventile.

Ausgestaltungen der Erfindung sind Gegenstand der Unteransprüche.

Ein Ausführungsbeispiel der Erfindung ist nachstehend unter Bezugnahme auf die zugehörige Zeichnung näher erläutert, die schematisch einen Schnitt durch eine Gasarmatur mit einem Gasdruckregler und zwei Sicherheitsventilen zeigt.

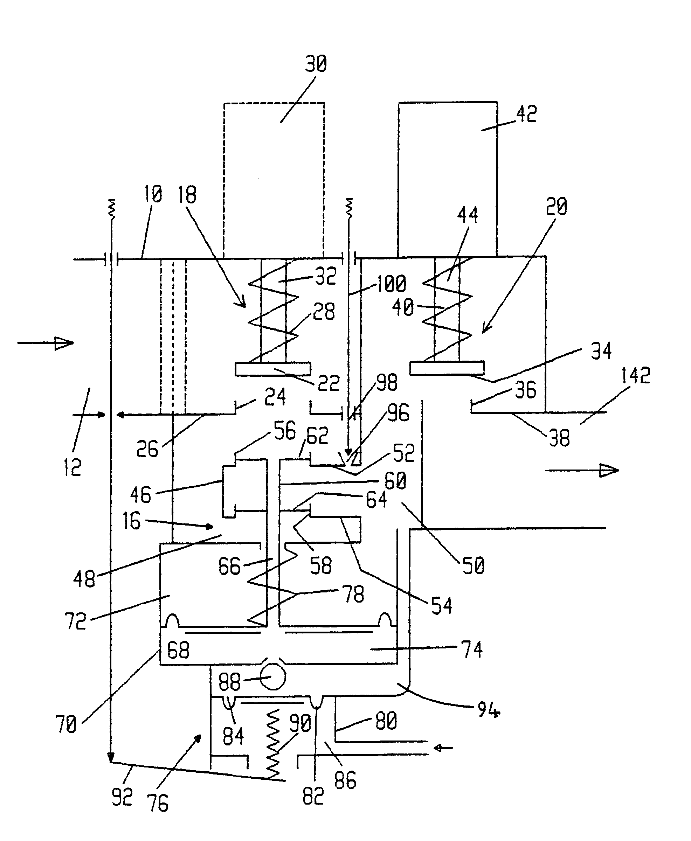

In der Figur ist mit 10 ein Gehäuse einer Gasarmatur bezeichnet. Die Gasarmatur weist einen Einlaß 12 und einen Auslaß 14 auf. Zwischen Einlaß 12 und Auslaß 14 ist ein Gasdruckregler 16 vorgesehen. Dem Gasdruckregler 16 ist ein erstes Sicherheitsventil 18 vorgeschaltet. Weiterhin ist dem Gasdruckregler 16 ein zweites Sicherheitsventil 20 nachgeschaltet.

Das Sicherheitsventil 18 weist einen Ventilteller 22 auf, der mit einem Ventilsitz 24 zusammenwirkt. Durch den Ventilsitz 24 hindurch ist die Verbindung zwischen dem Einlaß 12 und dem Gasdruckregler 16 hergestellt, die durch eine den Ventilsitz 24 aufweisende Wandung 26 voneinander getrennt sind. Der Ventilteller 22 steht unter dem Einfluß einer vorgespannten Druckfeder 28, welche den Ventilteller 22 auf den Ventilsitz 24 zu drücken sucht. Der Ventilteller 22 wird von einem Hubmagneten 30 über einen Ventilstößel 32 gegen die Wirkung der Druckfeder 28 von dem Ventilsitz 24 abgehoben.

In entsprechender Weise weist das Sicherheitsventil 20 einen Ventilteller 34 auf, der mit einem Ventilsitz 36 zusammenwirkt. Durch den Ventilsitz 36 hindurch ist die Verbindung zwischen dem Gasdruckregler 16 und dem Auslaß 14 hergestellt, die durch eine den Ventilsitz 36 aufweisende Wandung 38 voneinander getrennt sind. Der Ventilteller 34 steht unter dem Einfluß einer vorgespannten Druckfeder 40, welche den Ventilteller 34 auf den Ventilsitz 36 zu drücken sucht. Der Ventilteller 34 wird von einem Hubmagneten 42 über einen Ventilstößel 44 gegen die Wirkung der Druckfeder 40 von dem Ventilsitz 36 abgehoben.

Der Gasdruckregler 16 weist eine Trennwand 46 auf. Die Trennwand 46 trennt eine Einlaßkammer 48 des Gasdruckreglers 16 und eine Auslaßkammer 50. Die Trennwand 46 bildet eine Einbuchtung mit zwei zueinander parallelen Flächen 52 und 54. In den Flächen 52 und 54 sind fluchtende Bohrungen 56 bzw. 58 vorgesehen, in denen ein Kolbenschieber 60 lose beweglich ist. Der Kolbenschieber 60 ist ohne gleitenden Kontakt in den Bohrungen 56 und 58 geführt, so daß zwischen den Wandungen der Bohrungen 56 und 58 und dem Kolbenschieber 60 ein Spalt bleibt.

Der Kolbenschieber 60 ist spulenförmig mit zwei vorstehenden, scheibenförmigen Körpern 62 und 64. Der Körper 62 ist in der Bohrung 56 beweglich. Der Körper 64 ist in der Bohrung 58 beweglich. Die Körper 62 und 64 sind durch einen Stößel 66 miteinander verbunden. Die beiden Körper 62 und 64 haben gleiche Querschnitte. Der Körper 62 ist auf der Oberseite von dem Eingangsdruck beaufschlagt, der auf den Kolbenschieber 60 eine dem Eingangsdruck proportionale Kraft nach unten in der Figur ausübt. Der Körper 64 ist auf der Unterseite von dem Eingangsdruck beaufschlagt, der auf den Kolbenschieber eine dem Eingangsdruck proportionale Kraft nach oben in der Figur ausübt. Diese beiden dem Eingangsdruck proportionalen Kräfte heben sich auf. Auf der Unterseite ist der Körper 62 von dem Ausgangsdruck in der Auslaßkammer 50 beaufschlagt, der eine dem Ausgangsdruck proportionale Kraft nach oben in der Figur auf den Kolbenschieber 60 ausübt. Der Körper 64 ist auf der Oberseite von dem Ausgangsdruck beaufschlagt, der eine dem Ausgangsdruck proportionale Kraft nach unten in der Figur auf den Kolbenschieber ausübt. Auch die beiden dem Ausgangsdruck proportionalen Kräfte heben sich auf. Der Kolbenschieber 60 ist somit vollständig druckentlastet.

Der Kolbenschieber 60 ist über den Stößel 66 mit einer Stellmembran 68 verbunden. Die Stellmembran 68 ist in ein Membrangehäuse 70 eingespannt. Die Stellmembran 68 unterteilt das Membrangehäuse 70 in eine erste Membrankammer 72 und eine zweite Membrankammer 74. Die erste Membrankammer 72 steht mit der Auläßkammer 60 des Gasdruckreglers 16 in Verbindung. Die zweite Membrankammer 74 kann über ein Servoreglermeßwerk 76 von einem Solldruck beaufschlagt werden.

Der Stößel 66 ist durch die Wandung des Membrangehäuses 70 abdichten hindurchgeführt. In der ersten Membrankammer 72 ist um den Stößel 66 herum eine Schraubenfeder 78 angeordnet. Die Schraubendruckfeder 78 sucht die Stellmembran 68 nach unten in der Figur zu drücken (Ruhestellung).

Das Servoreglermeßwerk 72 enthält in einem Gehäuse 80 eine Membran 82. Die Fläche der Membran 82 ist wesentlich kleiner als die Fläche der Stellmembran 68 des Gasdruckreglers 16. Die Membran 82 unterteilt das Gehäuse 80 des Servoreglermeßwerkes 76 in eine "obere" Membrankammer 84 und eine "untere" Membrankammer 86. Die obere Membrankammer 84 grenzt an die zweite Membrankammer 74 des Gasdruckreglers 16 an und ist mit dieser über ein gesteuertes Ventil 88 verbunden. Das Ventil 88 ist von der Membran 82 gesteuert. Die Membran 82 ist von einer vorgespannten Schraubenfeder 90 belastet. Die Schraubenfeder 90 sitzt in der unteren Membrankammer 86. Die Vorspannung der Schraubenfeder 90 ist durch einen Stellmechanismus 92 einstellbar. Außerdem kann auf die untere Membrankammer 86 über eine Leitung 94 ein pneumatischer Steuerdruck, z.B. der Feuerungsdruck, aufgeschaltet werden. Die obere Membrankammer 84 des Servoreglermeßwerkes 76 ist über einen Kanal 94 mit der Auslaßkammer 50 verbunden.

An der relativ kleinen Membran 82 wird der Ausgangsdruck der Auslaßkammer gegen die Vorspannung der Schraubenfeder 90 ausgewogen. Die Membran steuert das Ventil 88. Dadurch wird über die Stellmembran 68 der Kolbenschieber 60 gesteuert. Die Funktion des Servoreglermeßwerkes 76 ist an sich bekannt und daher hier nicht mehr im einzelnen beschrieben.

Eine Absperrung des Gasdurchganges bei der beschriebenen Gasarmatur erfolgt durch die Sicherheitsventile 18 und 20.

Zwischen der Einlaßkammer 48 des Gasdruckreglers 16 und der Auslaßkammer 50 besteht eine direkte Verbindung 96, die von einem einstellbaren Ventil 98 beherrscht ist. Das Ventil 98 ist über eine Stellvorrichtung 100 von außen einstellbar. Das ermäglicht eine einstellbare, ungeregelte Gasmenge (Startgas) dem Brenner sofort nach dem Öffnen der Ventile 18,20 zuzuführen. Die Zuführung der vollen und geregelten Gasmenge kann erst erfolgen, wenn die Stellmembran 68 den Kolbenschieber 60 von der Ruhestellung in die Arbeitsstellung gebracht hat.

**Patentansprüche**

1. Gasarmatur mit einem Gasdruckregler, **dadurch gekennzeichnet, daß**

    (a) der Gasdruckregler ein Servoreglermeßwerk (76) enthält und das Regelventil (60) des Gasdruckreglers (16) ein Kolbenschieber ist,

(b) mit dem Gasdruckregler (16) wenigstens ein Sicherheitsventil (18,20) in Reihe geschaltet ist, durch welches der Gasweg vollständig absperrbar ist, und

(c) der Gasdruckregler (16) ein Regelglied (60) ohne Nullabschluß enthält.

2. Gasarmatur nach Anspruch 1, **dadurch gekennzeichnet, daß** die Sicherheitsventile (18,20) mit dem Gasdruckregler (16) zu einer integrierten Baugruppe vereinigt sind.

3. Gasarmatur nach Anspruch 1, **dadurch gekennzeichnet, daß** das Regelglied (60) sowohl vom Eingangsdruch des Gasdruckreglers als auch vom Ausgangsdruck vollständig druckentlastet ist.

4. Gasarmatur nach Anspruch 1, **gekennzeichnet durch** eine parallel zu dem Regelventil des Gasdruckreglers (16) herstellbare Verbindung zwischen Einlaßkammer (48) und Auslaßkammer (50) des Gasdruckreglers (16), die von einem einstellbaren Ventil (96) beherrscht ist.